# FASCICULE DE BREVET EUROPEEN

(11) **EP 0 776 079 B1**
(45) Date de publication et mention de la délivrance du brevet: **12.02.2003**
(21) Numéro de dépôt: 96402462.4
(22) Date de dépôt: 18.11.1996
(51) Int. Cl.: H02G 3/12

(54) **Dispositif de support pour appareillage, en particulier pour appareillage électrique, à rapporter sur un corps de goulotte**
Geräthalter, insbesondere für elektrisches Gerät, zur Befestigung auf einen Kabelkanalkörper
Apparatus support device, for instance for electrical apparatus to be installed on a ducting body

(30) Priorité: 23.11.1995 FR 9513936
(43) Date de publication de la demande: 28.05.1997
(73) Titulaire: LEGRAND, F-87000 Limoges (FR); LEGRAND SNC, F-87000 Limoges (FR)
(72) Inventeur: Perrignon de Troyes, François, 72140 Mont Saint Jean (FR); Decore, Bertrand, 72650 La Chapelle Saint Aubin (FR)
(74) Mandataire: CABINET BONNET-THIRION

(56) Documents cités:
- WO-A-91/12461
- NL-A- 7 605 009
- US-A- 3 911 637

## Description

La présente invention concerne d'une manière générale les dispositifs de support mis en oeuvre pour rapporter transversalement un quelconque appareillage sur un corps de goulotte de l'une à l'autre de deux parois longitudinales de celui-ci, qu'il s'agisse des ailes latérales de ce corps de goulotte ou qu'il s'agisse de l'une ou l'autre des cloisons internes qu'il peut éventuellement comporter pour une fragmentation de son volume intérieur en deux ou plusieurs compartiments, et elle vise plus particulièrement, mais non nécessairement exclusivement, le cas où cet appareillage est un appareillage électrique, tel que par exemple un socle de prise de courant.

Plus particulièrement, encore, la présente invention concerne ceux de ces dispositifs de support qui comportent deux traverses, qui, d'une part, par des moyens d'engagement, sont chacune adaptées à venir en prise avec l'une ou l'autre des parois longitudinales concernées du corps de goulotte à équiper, en tirant par exemple parti à ce sujet des retours que ces parois longitudinales présentent usuellement en direction l'une de l'autre le long de leur bord libre pour l'emboîtement d'un couvercle, et dont, d'autre part, chacune est équipée de moyens de fixation propres à permettre localement un assujettissement de l'appareillage à fixer, cet assujettissement se faisant par exemple par une vis.

Un dispositif de ce type est décrit dans le document NL 7 605 009.

En écartant l'une de l'autre les traverses, il est avantageusement possible d'adapter l'ensemble à n'importe quel entraxe de fixation parallèlement à la longueur du corps de goulotte, et, donc, parallèlement à la longueur du couvercle.

Toutefois, dans le dispositif selon le document NL 7 605 009, les moyens de fixation sont attachés à chaque traverse de manière prédéterminée de façon qu'ils ne permettent qu'une seule possibilité de fixation de l'appareillage par rapport aux parois longitudinales du corps de goulotte.

Dans certaines réalisations déjà connues, il est en outre possible, au moins dans une certaine mesure, d'adapter la longueur des traverses à la distance séparant l'une de l'autre en largeur les deux parois longitudinales concernées du corps de goulotte, et, donc, à la largeur du couvercle.

Mais, dans ces réalisations déjà connues, chacune des traverses est pour ce faire constituée d'au moins trois parties, à savoir une partie centrale, qui comporte les moyens de fixation, et qui présente à chacune de ses extrémités une ou plusieurs portions sécables, et des parties d'extrémité, qui comportent les moyens d'engagement nécessaires à une venue en prise de l'ensemble avec les parois longitudinales concernées du corps de goulotte à équiper, et qui sont à rapporter, par emboîtement, à la manière d'embouts, sur les extrémités de la partie centrale.

Pour l'adaptation en largeur recherchée, il suffit donc d'éliminer une ou plusieurs des portions sécables de la partie centrale.

Cette disposition présente cependant divers inconvénients, qui tiennent, pour l'essentiel, à la dépendance, qui existe inévitablement, entre l'adaptation à la largeur du couvercle et la position finale des moyens de fixation.

Si, par exemple, et cela est le cas le plus fréquent, l'appareillage à fixer doit être centré, c'est-à-dire si les moyens de fixation doivent être disposés à mi-largeur du couvercle, il est nécessaire, pour des raisons évidentes de symétrie, d'éliminer un nombre égal de portions sécables à l'une et l'autre des extrémités de la partie centrale des traverses, et, donc, d'intervenir en conséquence à chacune de celles-ci.

En outre, dans tous les cas, le réglage en position des moyens de fixation suivant la largeur du couvercle ne peut se faire que pas à pas, à raison de la longueur des portions sécables de la partie centrale des traverses.

La présente invention a d'une manière générale pour objet une disposition permettant d'éviter ces inconvénients et conduisant en outre à d'autres avantages.

De manière plus précise, elle a pour objet un dispositif de support pour appareillage électrique, à rapporter transversalement sur un corps de goulotte de l'une à l'autre de deux parois longitudinales de celui-ci, ce dispositif étant du genre comportant deux traverses, qui, par des moyens d'engagement, sont chacune adaptées à venir en prise avec l'une ou l'autre desdites parois longitudinales à chacune de leurs extrémités, et dont chacune est équipée de moyens de fixation propres à permettre localement un assujettissement de l'appareillage à fixer, et étant d'une manière générale caractérisé en ce que les moyens de fixation équipant une traverse sont montés réglables en position le long de celle-ci.

Par exemple, suivant une forme préférée de réalisation, ces moyens de fixation appartiennent à un plot qui, formé d'une pièce distincte de la traverse qu'il équipe, est monté mobile le long de celle-ci.

Quoi qu'il en soit, grâce à la disposition suivant l'invention, il y a avantageusement une certaine indépendance entre, d'une part, l'adaptation de la longueur des traverses à la largeur du couvercle, et, d'autre part, le réglage éventuel en position des moyens de fixation équipant cette traverse.

Il en résulte, notamment, que, pour l'adaptation à la largeur du couvercle, il est possible, au moins dans certains cas, de n'intervenir que sur l'une des extrémités des traverses, le réglage en position des moyens de fixation permettant ensuite de compenser le décentrement de ceux-ci.

Il en résulte, également, que, pour une longueur donnée des traverses, il est possible de modifier la position des moyens de fixation, ce qui peut permettre, par exemple, un certain décentrement de l'appareillage à fixer, tel que cela peut être nécessaire lorsque cet appareillage est solidaire d'une plaque enjoliveur par rapport à laquelle il est lui-même décentré, et ce qui peut également être nécessaire lorsque, le corps de goulotte comportant longitudinalement côte à côte deux compartiments à équiper, une disposition de deux appareillages au droit l'un de l'autre d'un de ces compartiments à l'autre se trouverait autrement interdite par un risque de chevauchement de ces appareillages l'un sur l'autre.

Dans tous les cas, enfin, la disposition suivant l'invention permet avantageusement un réglage en position de manière continue, ou sensiblement continue, des moyens de fixation équipant les traverses, sur une portion au moins de la longueur de ces traverses.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une goulotte sur le corps de laquelle un appareillage est rapporté à l'aide d'un dispositif de support suivant l'invention ;
la figure 2 est une vue en perspective éclatée de l'ensemble ;
la figure 3 est, à échelle supérieure, une vue en perspective d'une des traverses que comporte le dispositif de support suivant l'invention et du plot portant les moyens de fixation qui l'équipent ;
la figure 4 est une vue en perspective éclatée de cette traverse et de ce plot ;
la figure 5 est, suivant la flèche V de la figure 4, une vue en élévation, de face, de la traverse ;
la figure 6 en est une vue en coupe longitudinale, suivant la ligne VI-VI de la figure 5 ;
les figures 7 et 8 en sont des vues en coupe transversale, suivant chacune respectivement les lignes VII-VII et VIII-VIII de la figure 5 ;
la figure 9 en est une vue en coupe prise dans l'épaisseur, suivant la ligne IX-IX de la figure 6 ;
la figure 10 en est, à échelle supérieure, une vue partielle en coupe longitudinale, suivant la ligne X-X de la figure 9 ;
la figure 11 est, suivant la flèche XI de la figure 4, et à une échelle supérieure à celle de celle-ci, une vue en élévation, de face, du plot portant les moyens de fixation ;
la figure 12 est une vue en coupe longitudinale de ce plot, suivant la ligne XII-XII de la figure 11 ;
la figure 13 en est, à échelle encore supérieure, une vue en coupe transversale, suivant la ligne XIII-XIII de la figure 12 ;
la figure 14 reprend, à échelle encore supérieure, le détail de la figure 11 repéré par un encart XIV sur cette figure 11 ;
la figure 15 est une vue schématique en élévation, de face, illustrant les possibilités d'adaptation des traverses du dispositif de support suivant l'invention à diverses largeurs de couvercle ;
les figures 16 et 17 sont également des vues schématiques en élévation de face illustrant les possibilités qu'offre le dispositif de support suivant l'invention dans des conditions d'installation particulières.

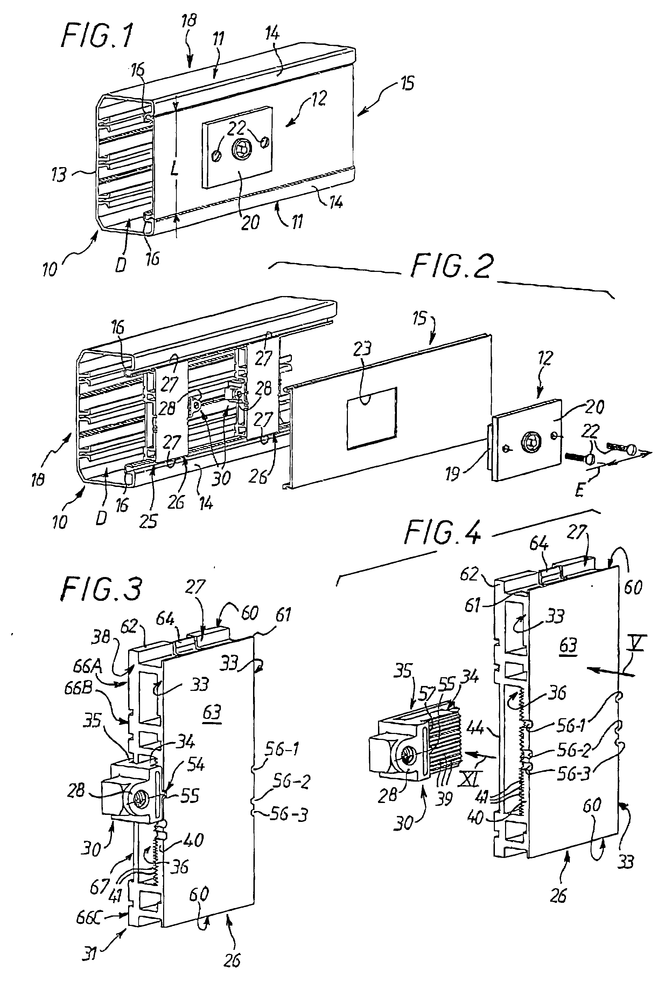

Tel qu'illustré sur ces figures, et ainsi qu'il est mieux visible sur les figures 1 et 2, il s'agit de rapporter transversalement, sur un corps de goulotte 10, de l'une à l'autre de deux parois longitudinales 11 de celui-ci, un quelconque appareillage 12.

Dans la forme de réalisation plus particulièrement représentée sur les figures 1 et 2, le corps de goulotte 10 a, globalement, en section transversale, un profil en U, et ne forme, longitudinalement, par lui-même, qu'un seul compartiment D.

Les parois longitudinales 11 entre lesquelles doit être établi l'appareillage 12 forment donc dans ce cas les ailes latérales extérieures du corps de goulotte 10.

Elles s'étendent globalement perpendiculairement à la semelle 13 de celui-ci, et elles ont l'une et l'autre une même hauteur.

Dans la forme de réalisation représentée, ces parois longitudinales 11 présentent, l'une et l'autre, le long de leur bord libre, un retour 14, qui, sensiblement parallèle à la semelle 13, est dirigé vers l'intérieur, et qui, pour l'encliquetage d'un couvercle 15, forme, à son extrémité libre, un bourrelet 16 globalement conformé en rainure

Le profilé 18, en forme de goulotte, ainsi constitué d'un corps de goulotte 10 et d'un couvercle 15, est bien connu par lui-même, et il ne sera donc pas décrit plus en détail ici.

Il s'agit, en pratique, d'un profilé électrique, dans la mesure où, l'appareillage 12 étant lui-même un appareillage électrique, il est apte au logement et à la protection des conducteurs électriques, non représentés, nécessaires à la desserte de celui-ci.

Dans ce qui suit, on désignera par L la distance séparant transversalement, en largeur, les parois longitudinales 11, mesurée au droit de la rainure formée par le bourrelet 16 de leur retour 14.

Cette distance L correspond sensiblement à la largeur du couvercle 15.

Dans la forme de réalisation représentée, ce retour 14 a une même largeur pour l'une et l'autre des parois longitudinales 11.

L'appareillage 12 ne relève pas, lui non plus, de la présente invention, et il ne sera donc pas, lui aussi, décrit en détail ici.

Il suffira d'indiquer qu'il comporte, globalement, un mécanisme 19, et, en façade, une plaque enjoliveur 20, dont le mécanisme 19 est, ou non, solidaire, et dont le périmètre est supérieur à celui de ce dernier.

Par exemple, et tel que représenté, cet appareillage 12 est une prise de télévision.

Quoi qu'il en soit, dans la forme de réalisation représentée, sa fixation sur le corps de goulotte 10 implique la mise en oeuvre de deux moyens de fixation 22, suivant un entraxe E, parallèlement à la direction d'allongement du corps de goulotte 10, et, donc, suivant la longueur du couvercle 15.

Pour des raisons de symétrie, cette fixation se fait le plus souvent à mi-largeur du couvercle 15, suivant le plan médian de celui-ci.

Dans la forme de réalisation représentée, et eu égard à l'égalité de largeur des retours 14 des parois longitudinales 11, ce plan médian se confond avec le plan longitudinal de symétrie S du compartiment D du corps de goulotte 10, et les moyens de fixation 22 interviennent donc suivant ce plan longitudinal de symétrie S.

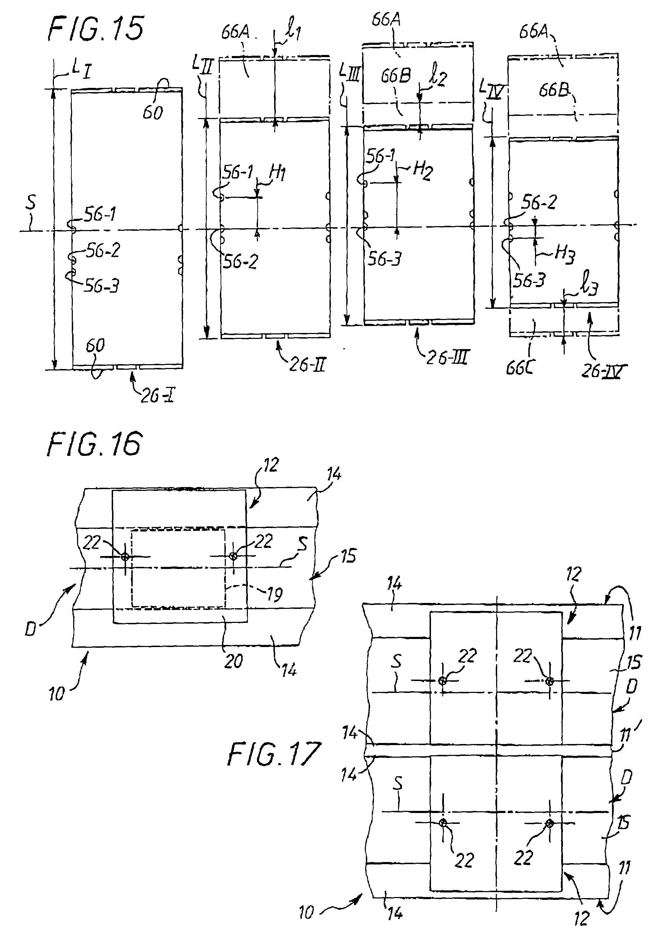

Celui-ci a été schématisé par sa trace sur la figure 15.

Dans la forme de réalisation représentée, les moyens de fixation 22 sont des vis.

Pour l'implantation de l'appareillage 12, il peut être procédé à une interruption locale du couvercle 15.

Mais, tel que représenté, il peut également être pratiqué localement dans celui-ci une ouverture 23 propre au passage du seul mécanisme 19, cette ouverture 23 ayant un périmètre intermédiaire entre celui de ce mécanisme 19 et celui de la plaque enjoliveur 20.

Pour la fixation de l'appareillage 12 sur le corps de goulotte 10, il est mis en oeuvre un dispositif de support 25 propre à recevoir cet appareillage 12.

De manière connue en soi, ce dispositif de support 25 comporte, globalement, deux traverses 26, qui, par des moyens d'engagement 27, explicités ultérieurement, sont chacune adaptées à venir en prise avec l'une ou l'autre des parois longitudinales 11 du corps de goulotte 10 à chacune de leurs extrémités, et dont chacune est équipée de moyens de fixation 28 propres à permettre localement un assujettissement de l'appareillage 12 à fixer et destinés, donc, à coopérer avec les moyens de fixation 22.

Dans la forme de réalisation représentée, les moyens de fixation 28 forment un puits de fixation unique, et, les moyens de fixation 22 étant des vis, il s'agit, en pratique, d'un puits de vissage.

Suivant l'invention, les moyens de fixation 28 équipant ainsi une traverse 26 sont montés réglables en position le long de celle-ci.

Plus précisément, et suivant des modalités qui seront décrites plus en détail ultérieurement, ces moyens de fixation 28 sont montés réglables en position de manière sensiblement continue sur une portion au moins de la longueur de la traverse 26.

Dans la forme de réalisation représentée, les moyens de fixation 28 équipant une traverse 26 appartiennent, en pratique, à un plot 30, qui, formé d'une pièce distincte de cette traverse 26, est monté mobile, et blocable en position, sur celle-ci.

En pratique, porté par la traverse 26, le plot 30 auquel appartiennent les moyens de fixation 28 associés à celle-ci est dûment retenu par cette traverse 26, en formant avec elle un sous-ensemble unitaire 31, figure 3.

Dans la forme de réalisation représentée, les moyens de fixation 28 équipant une traverse 26 s'étendent latéralement, en porte à faux, par rapport à cette traverse 26, le long d'une tranche 33 de celle-ci, en l'espèce une tranche longitudinale, transversalement par rapport à cette tranche 33, et le plot 30 auquel ils appartiennent comporte, latéralement, en saillie, par rapport à eux, au moins une patte 34, 35 par laquelle il est en prise avec la traverse 26.

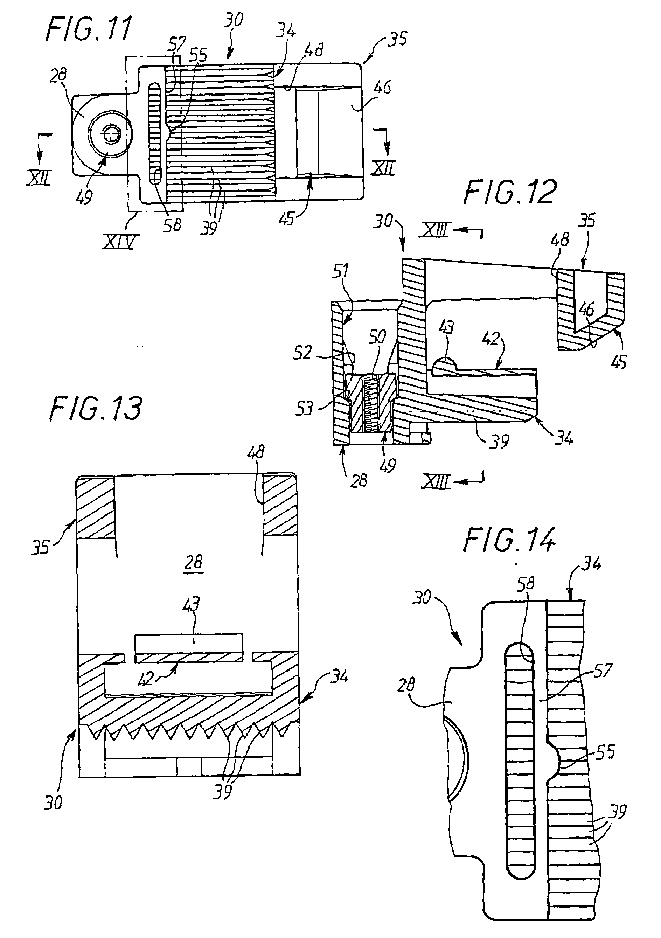

En pratique, dans cette forme de réalisation, et ainsi qu'il est mieux visible sur la figure 12, le plot 30 comporte, globalement parallèlement l'une à l'autre, deux pattes 34, 35, à savoir, d'une part, une patte de blocage 34, qui est située à l'avant, et par laquelle il est engagé dans une fente 36 ménagée à cet effet dans l'épaisseur même de la traverse 26, le long d'une partie au moins de la longueur de la tranche 33 concernée de celle-ci, et, d'autre part, une patte de retenue 35, qui est située à l'arrière, et par laquelle, contournant la traverse 26, il est crocheté dans une rainure 37 ménagée à cet effet en creux sur la face arrière 38 de cette traverse 26, parallèlement à la tranche 33.

L'une et l'autre des pattes 34, 35 s'étendent sensiblement perpendiculairement à l'axe du puits que constituent les moyens de fixation 28.

La patte de blocage 34, qui a une longueur moindre que celle de la patte de retenue 35, comporte, en saillie sur sa surface supérieure, des crans 39, qui, parallèles les uns aux autres, s'étendent suivant sa longueur, et donc transversalement par rapport à la traverse 26, et le flanc 40 correspondant de la fente 36 de cette traverse 26 comporte, lui-même, transversalement, des crans 41, qui, parallèles entre eux, sont complémentaires des crans 39 précédents.

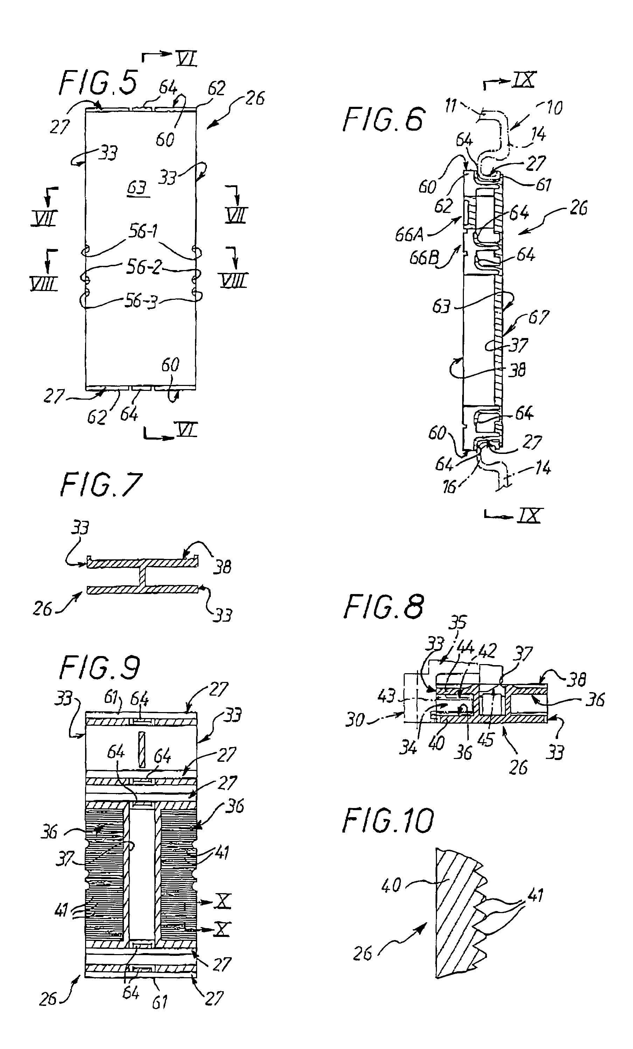

Parallèlement à sa patte de blocage 34, et à distance de celle-ci, le plot 30 auquel appartiennent les moyens de fixation 28 comporte une languette élastiquement déformable 42 qui, par un bourrelet 43 arrondi, porte, à son extrémité libre, sur l'autre flanc 44 de la fente 36 de la traverse 26, figures 8, 12 et 13.

Ainsi, la patte de blocage 34 du plot 30 est en permanence sollicitée élastiquement en direction du flanc 40 de la fente 36 de la traverse 26, en sorte que ses crans 39 sont normalement en permanence en prise avec les crans 41 de celui-ci.

Corollairement, la patte de retenue 35 du plot 30 comporte, à son extrémité libre, au-delà de l'extrémité libre de la patte de blocage 34, un bossage 45, en forme de cran, par lequel elle est en prise avec la rainure 37 de la traverse 26.

Pour faciliter son engagement dans cette rainure 37, ce bossage 45 est abattu par un chanfrein 46 le long de son bord d'attaque, figures 11 et 12.

En pratique, pour faciliter une réalisation par moulage de l'ensemble, la patte de retenue 35 est évidée par un ajour 48, entre les moyens de fixation 28 et son bossage 45.

Dans la forme de réalisation représentée, le puits que constituent les moyens de fixation 28 est équipé par avance d'une douille 49 dont l'alésage 50 est taraudé.

Par exemple, et tel que représenté, cette douille 49 est simplement engagée à force, de l'arrière, dans ce puits, l'évidement interne 51 de celui-ci comportant, d'une part, des saillies longitudinales 52 pour la retenue axiale de cette douille 49 au vissage, dans un sens s'opposant à son refoulement, et, d'autre part, un épaulement transversal 53, pour sa retenue axiale dans le sens opposé au précédent, figure 12.

Préférentiellement, et tel que représenté, il est prévu, entre le plot 30 et la traverse 26, des moyens d'indexation 54, figure 3.

Dans la forme de réalisation représentée, ces moyens d'indexation 54 comportent, sur le plot 30, un bossage 55, arrondi, et, sur la traverse 26, au moins une encoche 56, également arrondie et complémentaire du bossage 55.

En pratique, le bossage 55 est porté par une lamelle élastiquement déformable 57 qui, intervenant en façade, s'étend sensiblement transversalement par rapport aux pattes 34, 35, au-dessus de la patte de blocage 34, et qui, à chacune de ses extrémités, se rattache d'un seul tenant aux moyens de fixation 28, en étant ainsi séparée de ceux-ci par une fente 58.

Le bossage 55, qui est sensiblement à mi-longueur de la languette élastiquement déformable 57, se situe au droit de l'axe du puits que constituent les moyens de fixation 28.

Corollairement, l'encoche 56 affecte la tranche 33 de la traverse 26, et, plus précisément, la partie de cette tranche 33 appartenant au flanc 40 de la fente 36.

En pratique, dans la forme de réalisation représentée, plusieurs encoches 56 sont prévues.

Par exemple, et tel que représenté, il y a ainsi, suivant des implantations qui seront précisées ultérieurement, trois encoches 56, respectivement 56-1, 56-2 et 56-3, figures 3 et 4.

Ainsi qu'il apparaîtra ci-après, les moyens d'indexation 54 privilégient ainsi plusieurs positions déterminées pour le plot 30 auquel appartiennent les moyens de fixation 28.

Dans la forme de réalisation représentée, la traverse 26 est d'un seul tenant.

En outre, dans cette forme de réalisation, elle se présente sous la forme générale d'une plaquette de contour globalement quadrangulaire, et, en pratique, rectangulaire.

Elle comporte, donc, dans cette forme de réalisation, d'une part, deux tranches 33, qui sont, en pratique, ses tranches longitudinales, et le long de l'une desquelles s'étend le plot 30 comportant les moyens de fixation 28 associés, et, d'autre part, sensiblement perpendiculairement aux précédentes, deux tranches 60, qui sont donc ses tranches transversales, et le long de chacune desquelles interviennent les moyens d'engagement 27.

Préférentiellement, pour pouvoir indifféremment intervenir à droite ou à gauche de l'appareillage 12, la traverse 26 comporte un plan de symétrie, parallèlement à ses tranches 33 longitudinales.

Elle comporte donc, sur chacune de ces deux tranches 33 opposées, une fente 36 et des encoches 56, et sa rainure 37 s'étend le long d'une ligne médiane, dans son plan longitudinal de symétrie.

Ainsi, bien que formant des pièces distinctes, c'est-à-dire des pièces dépourvues de lien entre elles autre que celui assuré par l'appareillage 12, les deux traverses 26 nécessaires à la constitution du dispositif de support 25 suivant l'invention sont avantageusement identiques l'une à l'autre.

Dans la forme de réalisation représentée, les moyens d'engagement 27 qu'une traverse 26 comporte à chacune de ses extrémités pour venir en prise avec une paroi longitudinale 11 du corps de goulotte 10 sont des moyens de rainure prévus en creux sur sa tranche 60 correspondante.

Autrement dit, la traverse 26 forme, sur chacune de ses tranches 60 transversales, et tout au long de celles-ci, pour la définition des moyens de rainure correspondants, en l'espèce une rainure, deux lèvres 61, 62, l'une du côté de la face avant 63, l'autre du côté de la face arrière 38.

Pour faciliter l'engagement du couvercle 15 sur les traverses 26, la lèvre 61, qui s'étend du côté de la face avant 63, à niveau avec cette face avant 63 et en continuité avec celle-ci, a, volontairement, une épaisseur réduite.

En pratique, cette épaisseur est inférieure à celle de la lèvre 62 qui s'étend du côté de la face arrière 38.

Dans la forme de réalisation représentée, la lèvre 62 est localement interrompue, dans sa zone médiane, par une patte élastiquement déformable 64, qui, mordant légèrement sur la rainure correspondante, est destinée à assurer un serrage local du bourrelet 16 des retours 14 des parois longitudinales 11 du corps de goulotte 10, pour le freinage de l'ensemble sur celui-ci.

Cette patte élastiquement déformable 64 assure, notamment, au montage, un maintien en place des traverses 26 sur le corps de goulotte 11, en compensant les inévitables tolérances de fabrication.

A l'une au moins de ses extrémités, c'est-à-dire le long de l'une au moins de ses tranches 60 transversales, chacune des traverses 26 comporte, parallèlement à cette tranche 60, au moins une portion sécable 66, et les moyens d'engagement 27 qu'elle comporte pour venir en prise avec une paroi longitudinale 11 du corps de goulotte 10 y sont répétés, sa portion centrale intangible 67, et sa portion sécable 66, ou chacune de ses portions sécables 66, comportant de tels moyens d'engagement 27.

En pratique, dans la forme de réalisation représentée, la traverse 26 comporte plusieurs portions sécables 66.

Plus précisément, dans cette forme de réalisation, il y a deux portions sécables 66A, 66B à l'une des extrémités de la traverse 26, et une portion sécable 66C à l'autre de ses extrémités.

Les portions sécables 66A, 66B sont d'importances inégales, la portion sécable 66A, qui est la première à compter de la tranche 60, ayant, parallèlement aux tranches 33, une largeur l₁ supérieure à celle l₂ de la portion sécable 66B qui la suit, figure 15.

Corollairement, les portions sécables 66B, 66C ont sensiblement la même importance.

Autrement dit, la largeur l₃ de la portion sécable 66C est sensiblement égale à celle l₂ de la portion sécable 66B.

Mais toutes ces portions sécables 66A, 66B, 66C comportent individuellement des moyens d'engagement 27, c'est-à-dire des moyens de rainure, avec, dans leur zone médiane, une patte élastiquement déformable 64, et il en est de même pour la portion centrale intangible 67.

Bien entendu, la fente 36 que comporte une traverse 26 pour l'intervention du plot 30 ne s'étend que sur sa portion centrale intangible 67.

Lorsque, comme représenté en 26-I sur la figure 15 pour l'une d'elles, les traverses 26 sont mises en oeuvre à pleine longueur, c'est-à-dire avec l'ensemble de leurs portions sécables 66, elles satisfont à une première valeur L_{I} pour la largeur du couvercle 15.

Si, comme il est usuel, l'appareillage 12 doit être centré, en étant disposé suivant le plan longitudinal de symétrie S du compartiment D du corps de goulotte 10, c'est avec l'encoche 56-1 des traverses 26 que le plot 30 associé à chacune de celles-ci est amené en prise par son bossage 55, et, en pratique, cette encoche 56-1 se situe à mi-distance des tranches 60 transversales de ces traverses 26.

Lorsque, comme représenté en 26-II, et tel que schématisé en traits interrompus, la portion sécable 66A des traverses 26 est éliminée, ces traverses 26 satisfont à une valeur L_{II} inférieure à la valeur L_{I} précédente pour la largeur du couvercle 15.

Si, comme précédemment, l'appareillage 12 doit être centré, c'est alors avec l'encoche 56-2 que le plot 30 est amené en prise.

Lorsque, comme représenté en 26-III sur la figure 15, et tel que schématisé en traits interrompus, les deux portions sécables 66A, 66B des traverses 26 sont éliminées, ces traverses 26 satisfont alors à une valeur L_{III}, inférieure aux valeurs L_{I}, L_{II} précédentes, pour la largeur du couvercle 15.

Si, comme précédemment, l'appareillage 12 doit être centré, c'est avec l'encoche 56-3 que le plot 30 est amené en prise.

Enfin, lorsque, comme représenté en 26-IV sur la figure 15, et tel que schématisé en traits interrompus sur celle-ci, les trois portions sécables 66A, 66B, 66C des traverses 26 sont toutes éliminées, ces traverses 26 satisfont à une valeur L_{IV}, inférieure aux valeurs L_{I}, L_{II}, L_{III} précédentes, pour la largeur du couvercle 15.

Si, comme précédemment, l'appareillage 12 doit être centré, c'est alors à nouveau avec l'encoche 56-2 que le plot 30 est amené en prise.

Il résulte de ce qui précède que la distance H₁ séparant l'une de l'autre les deux encoches 56-1, 56-2 est sensiblement égale à la moitié de la largeur l₁ de la portion sécable 66A, que, de même, la distance H₂ séparant l'une de l'autre les encoches 56-1, 56-3 est sensiblement égale à la moitié de la somme cumulée de la largeur l₁ de la portion sécable 66A et de la largeur l₂ de la portion sécable 66B, et que la distance H₃ séparant l'une de l'autre les deux encoches 56-2, 56-3 est sensiblement égale à la moitié de la largeur l₃ de la portion sécable 66C.

La figure 16 illustre le cas où, en variante, le mécanisme 19 de l'appareillage 12 est excentré par rapport à sa plaque enjoliveur 20.

Dans un tel cas, si, comme précédemment, ce mécanisme 19 doit être centré par rapport au compartiment D du corps de goulotte 10, en s'étendant suivant le plan longitudinal de symétrie S de celui-ci, il ne peut plus en être de même de la plaque enjoliveur 20.

Il suffit, dans ce cas, de déplacer en conséquence, le long des traverses 26, les plots 30 portant les moyens de fixation 28, comme le matérialisent les moyens de fixation 22 sur la figure 16.

La figure 17 illustre, également, en variante, le cas où le corps de goulotte 10 forme longitudinalement, entre ses deux parois longitudinales 11, deux compartiments D distincts séparés l'un de l'autre par une paroi longitudinale 11' qui, intermédiaire entre les parois longitudinales 11, forme une cloison interne entre celles-ci.

Lorsque deux appareillages 12 se trouvent au droit l'un de l'autre d'un des compartiments D à l'autre, il peut être nécessaire d'en décentrer l'un et/ou l'autre, comme représenté pour les deux sur la figure 17.

Il suffit, dans ce cas, de déplacer, comme précédemment, en conséquence, vis-à-vis des plans longitudinaux de symétrie S correspondants ou, plus précisément, vis-à-vis du plan médian des couvercles 15 correspondants, lorsque, comme en l'espèce, les retours 14 des parois longitudinales 11, 11' concernées du corps de goulotte 10 ont des largeurs inégales, les plots 30 portant les moyens de fixation 28, comme le matérialisent les moyens de fixation 22 correspondants sur cette figure 17

Le réglage en position des moyens de fixation 28 le long des traverses 26 se fait alors, sinon de manière strictement continue, au moins de manière sensiblement continue, en intervenant en pratique cran par cran.

Dans tous les cas, lorsque, comme en l'espèce, les moyens de fixation 22 sont des vis, l'intervention de ces moyens de fixation 22 confirme le blocage en position, sur les traverses 26, des plots 30 portant les moyens de fixation 28 complémentaires associés à celles-ci.

Bien entendu, la présente invention ne se limité pas à la forme de réalisation décrite et représentée ni aux formes de mise en oeuvre également décrites et représentées, mais englobe toute variante d'exécution.

En particulier, au lieu d'intervenir en façade, comme plus particulièrement décrit et représenté, le dispositif de support suivant l'invention peut tout aussi bien intervenir sur la hauteur des parois longitudinales du corps de goulotte entre lesquelles il doit s'étendre, en un point de ces parois longitudinales intermédiaire entre leur partie inférieure et leur partie supérieure.

En outre, au lieu de constituer des moyens de rainure, et donc des moyens d'emboîtement femelles, les moyens d'engagement que comportent ses traverses pour venir en prise avec ces parois longitudinales peuvent tout aussi bien constituer des moyens d'emboîtement mâles, comme cela est le cas pour les dispositifs de support dont le socle est équipé de jambages constituant de tels moyens d'emboîtement mâles à l'égard des moyens d'emboîtement femelles prévus de manière complémentaire sur le corps de goulotte et formés par exemple par des rainures courant sur les parois longitudinales de celui-ci.

Les moyens de fixation équipant les traverses du dispositif de support suivant l'invention ne forment pas non plus nécessairement un puits de vissage, d'autres moyens de fixation, tels que par exemple des moyens d'encliquetage, pouvant au contraire être aussi envisagés pour l'assujettissement à ces traverses de l'appareillage à fixer.

Enfin, et comme cela est le cas pour la variante de réalisation représentée sur la figure 17, les retours des parois longitudinales concernées du corps de goulotte à équiper peuvent avoir des largeurs différentes d'une de ces parois longitudinales à l'autre, et le centrage, dans ce cas, est apprécié, non pas par rapport au plan longitudinal de symétrie du compartiment correspondant, mais par rapport au plan médian de son couvercle.

## Revendications

1. Dispositif de support pour appareillage électrique à rapporter transversalement sur un corps de goulotte de l'une à l'autre de deux parois longitudinales de celui-ci, du genre comportant deux traverses (26), qui, par des moyens d'engagement (27), sont chacune adaptées à venir en prise avec l'une ou l'autre desdites parois longitudinales (11, 11') à chacune de leurs extrémités, et dont chacune est équipée de moyens de fixation (28) propres à permettre localement un assujettissement de l'appareillage (12) à fixer, **caractérisé en ce que** les moyens de fixation (28) équipant une traverse (26) sont montés réglables en position le long de celle-ci.

2. Dispositif de support suivant la revendication 1, **caractérisé en ce que** les moyens de fixation (28) équipant une traverse (26) sont montés réglables en position de manière sensiblement continue sur une portion au moins de la longueur de celle-ci.

3. Dispositif de support suivant l'une quelconque des revendications 1, 2, **caractérisé en ce que** les moyens de fixation (28) équipant une traverse (26) appartiennent à un plot (30) qui, formé d'une pièce distincte de cette traverse (26), est monté mobile sur celle-ci.

4. Dispositif de support suivant la revendication 3, **caractérisé en ce que** le plot (30) auquel appartiennent les moyens de fixation (28) est blocable en position sur la traverse (26).

5. Dispositif de support suivant l'une quelconque des revendications 3, 4, **caractérisé en ce que**, porté par la traverse (26), le plot (30) auquel appartiennent les moyens de fixation (28) est dûment retenu par celle-ci, en formant avec elle un sous-ensemble unitaire (31).

6. Dispositif de support suivant l'une quelconque des revendications 3 à 5, **caractérisé en ce que** les moyens de fixation (28) équipant une traverse (26) s'étendent latéralement par rapport à cette traverse (26), le long d'une tranche (33) de celle-ci, transversalement par rapport à cette tranche (33), et le plot (30) auquel ils appartiennent comporte, latéralement, en saillie par rapport à eux, au moins une patte (34, 35) par laquelle il est en prise avec la traverse (26).

7. Dispositif de support suivant la revendication 6, **caractérisé en ce que** le plot (30) auquel appartiennent les moyens de fixation (28) comporte, globalement parallèlement l'une à l'autre, deux pattes (34, 35), à savoir une patte de blocage (34), par laquelle il est engagé dans une fente (36) ménagée à cet effet dans l'épaisseur même de la traverse (26), le long d'une partie au moins de la longueur de la tranche (33) concernée de celle-ci, et une patte de retenue (35), par laquelle, contournant la traverse (26), il est crocheté dans une rainure (37) ménagée à cet effet en creux sur la face arrière (38) de celle-ci, parallèlement à la tranche (33).

8. Dispositif de support suivant les revendications 4 et 7, prises conjointement, **caractérisé en ce que** la patte de blocage (34) du plot (30) auquel appartiennent les moyens de fixation (28) comporte des crans (39), et le flanc (40) correspondant de la fente (36) de la traverse (26) comporte lui-même des crans (41) complémentaires.

9. Dispositif de support suivant la revendication 8, **caractérisé en ce que**, parallèlement à sa patte de blocage (34), et à distance de celle-ci, le plot (30) auquel appartiennent les moyens de fixation (28) comporte une languette élastiquement déformable (42) qui porte sur l'autre flanc (44) de la fente (36) de la traverse (26).

10. Dispositif de support suivant l'une quelconque des revendications 3 à 9, **caractérisé en ce qu'**il est prévu, entre le plot (30) auquel appartiennent les moyens de fixation (28) et la traverse (26), des moyens d'indexation (54).

11. Dispositif de support suivant la revendication 10, **caractérisé en ce que** les moyens d'indexation (54) privilégient plusieurs positions déterminées pour le plot (30) auquel appartiennent les moyens de fixation (28).

12. Dispositif de support suivant l'une quelconque des revendications 1 à 11, **caractérisé en ce que** les moyens de fixation (28) forment un puits de vissage.

13. Dispositif de support suivant l'une quelconque des revendications 1 à 12, **caractérisé en ce que** les moyens d'engagement (27) que la traverse (26) comporte à chacune de ses extrémités pour venir en prise avec une paroi longitudinale (11) du corps de goulotte (10) étant des moyens de rainure prévus en creux sur sa tranche (60) correspondante, la lèvre (61) définissant ces moyens de rainure du côté de la face avant (63) de la traverse (26) a une épaisseur inférieure à celle de la lèvre (62) qui s'étend du côté de sa face arrière (38).

14. Dispositif de support suivant l'une quelconque des revendications 1 à 13, **caractérisé en ce que**, à l'une au moins de ses extrémités, la traverse (26) comporte au moins une portion sécable (66), et les moyens d'engagement (27) qu'elle comporte pour venir en prise avec une paroi longitudinale (11, 11') du corps de goulotte (10) y sont répétés, sa portion centrale intangible (67) et sa portion sécable (66), ou chacune de ses portions sécables (66), comportant de tels moyens d'engagement (27).

15. Dispositif de support suivant les revendications 11 et 14, prises conjointement, **caractérisé en ce que** la traverse (26) comporte plusieurs portions sécables (66A, 66B, 66C).

16. Dispositif de support suivant la revendication 7, **caractérisé en ce que** la traverse (26) présente une fente (36) sur chacune de deux tranches (33) opposées, et sa rainure (37) s'étend le long d'une ligne médiane.

17. Dispositif de support suivant l'une quelconque des revendications 1 à 16, **caractérisé en ce que** la traverse (26) est d'un seul tenant.

18. Dispositif de support suivant l'une quelconque des revendications 1 à 17, **caractérisé en ce que** la traverse (26) se présente sous la forme générale d'une plaquette de contour globalement quadrangulaire.

19. Dispositif de support suivant l'une quelconque des revendications 1 à 18, **caractérisé en ce que**, bien que formant des pièces distinctes, les deux traverses (26) sont identiques l'une à l'autre.

## Patentansprüche

1. Tragvorrichtung für elektrisches Gerät zur Anbringung quer auf einem Rinnenkörper von einer von zwei seiner Längswände zur anderen, umfassend zwei Stege (26), die durch Eingriffsmittel (27) jeweils dafür ausgelegt sind, mit der einen oder der anderen dieser Längswände (11, 11') an jedem ihrer Enden in Eingriff zu kommen, und von denen jeder mit Befestigungsmitteln (28) versehen ist, die örtlich eine Anbringung des zu befestigenden Geräts (12) gestatten, **dadurch gekennzeichnet, daß** die Befestigungsmittel (28) eines Stegs (26) in ihrer Stellung längs dieses verstellbar montiert sind.

2. Tragvorrichtung nach Anspruch 1, **dadurch gekennzeichnet, daß** die Befestigungsmittel (28) eines Stegs (26) mindestens auf einem Teil von dessen Länge in ihrer Stellung im wesentlichen kontinuierlich verstellbar montiert sind.

3. Tragvorrichtung nach einem der Ansprüche 1, 2, **dadurch gekennzeichnet, daß** die Befestigungsmittel (28) eines Stegs (26) zu einem Klotz (30) gehören, der von einem von diesem Steg (26) getrennten Teil gebildet ist und auf diesem beweglich montiert ist.

4. Tragvorrichtung nach Anspruch 3, **dadurch gekennzeichnet, daß** der Klotz (30), zu dem die Befestigungsmittel (28) gehören, in seiner Stellung auf dem Steg (26) blockierbar ist.

5. Tragvorrichtung nach einem der Ansprüche 3, 4, **dadurch gekennzeichnet, daß** der von dem Steg (26) getragene Klotz (30), zu dem die Befestigungsmittel (28) gehören, von diesem in geeigneter Weise gehalten ist und mit diesem eine Untereinheit (31) bildet.

6. Tragvorrichtung nach einem der Ansprüche 3 bis 5, **dadurch gekennzeichnet, daß** die Befestigungsmittel (28) eines Stegs (26) sich seitlich bezüglich dieses Stegs (26) längs einer Kante (33) von ihm quer bezüglich dieser Kante (33) erstrecken und der Klotz (30), zu dem sie gehören, seitlich bezüglich dieser vorstehend mindestens einen Lappen (34, 35) aufweist, über den er mit dem Steg (26) in Eingriff ist.

7. Tragvorrichtung nach Anspruch 6, **dadurch gekennzeichnet, daß** der Klotz (30), zu dem die Befestigungsmittel (28) gehören, insgesamt parallel zueinander zwei Lappen (34, 35) aufweist, und zwar einen Blockierlappen (34), über den er in einen Schlitz (36) eingeführt ist, der zu diesem Zweck in der Dicke des Stegs (26) selbst längs mindestens eines Teils der Länge seiner betreffenden Kante (33) vorgesehen ist, und einen den Steg (26) umgreifenden Rückhaltelappen (35), über den er in einer Nut (37) verhakt ist, die zu diesem Zweck vertieft auf der Rückseite (38) des Stegs parallel zur Kante (33) vorgesehen ist.

8. Tragvorrichtung nach den Ansprüchen 4 und 7 zusammen, **dadurch gekennzeichnet, daß** der Blockierlappen (34) des Klotzes (30), zu dem die Befestigungsmittel (28) gehören, Kerben (39) aufweist und die entsprechende Flanke (40) des Schlitzes (36) des Stegs (26) ihrerseits ergänzende Kerben (41) aufweist.

9. Tragvorrichtung nach Anspruch 8, **dadurch gekennzeichnet, daß** der Klotz (30), zu dem die Befestigungsmittel (28) gehören, parallel zu seinem Blockierlappen (34) und in einem Abstand von diesem eine elastisch verformbare Zunge (42) aufweist, die auf der anderen Flanke (44) des Schlitzes (36) des Stegs (26) aufliegt.

10. Tragvorrichtung nach einem der Ansprüche 3 bis 9, **dadurch gekennzeichnet, daß** zwischen dem Klotz (30), zu dem die Befestigungsmittel (28) gehören, und dem Steg (26) Rastmittel (54) vorgesehen sind.

11. Tragvorrichtung nach Anspruch 10, **dadurch gekennzeichnet, daß** die Rastmittel (54) mehreren bestimmten Stellungen für den Klotz (30), zu dem die Befestigungsmittel (28) gehören, den Vorrang geben.

12. Tragvorrichtung nach einem der Ansprüche 1 bis 11, **dadurch gekennzeichnet, daß** die Befestigungsmittel (28) einen Schraubschacht bilden.

13. Tragvorrichtung nach einem der Ansprüche 1 bis 12, **dadurch gekennzeichnet, daß** die Eingriffsmittel (27), die der Steg (26) an jedem seiner Enden besitzt, um mit einer Längswand (11) des Rinnenkörpers (10) in Eingriff zu kommen, Nutmittel sind, die auf seiner entsprechenden Kante (60) vertieft vorgesehen sind, und daß die Lippe (61), die diese Nutmittel auf der Seite der Vorderseite (63) des Stegs (26) bildet, eine kleinere Dicke als die Lippe (62) hat, die sich auf der Seite seiner Rückseite (38) erstreckt.

14. Tragvorrichtung nach einem der Ansprüche 1 bis 13, **dadurch gekennzeichnet, daß** der Steg (26) an mindestens einem seiner Enden mindestens einen abtrennbaren Abschnitt (66) besitzt und die Eingriffsmittel (27), die er besitzt, um mit einer Längswand (11, 11') des Rinnenkörpers (10) in Eingriff zu kommen, auf diesem wiederholt sind, wobei sein zentraler, unabbrechbarer Bereich (67) und sein abtrennbarer Abschnitt (66) oder jeder seiner abtrennbaren Abschnitte (66) derartige Eingriffsmittel (27) aufweisen.

15. Tragvorrichtung nach den Ansprüchen 11 und 14 zusammen, **dadurch gekennzeichnet, daß** der Steg (26) mehrere abtrennbare Abschnitte (66A, 66B, 66C) aufweist.

16. Tragvorrichtung nach Anspruch 7, **dadurch gekennzeichnet, daß** der Steg (26) auf jeder von zwei entgegengesetzten Kanten (33) einen Schlitz (36) aufweist und seine Nut (37) sich längs einer Mittellinie erstreckt.

17. Tragvorrichtung nach einem der Ansprüche 1 bis 16, **dadurch gekennzeichnet, daß** der Steg (26) einstückig ausgeführt ist.

18. Tragvorrichtung nach einem der Ansprüche 1 bis 17, **dadurch gekennzeichnet, daß** der Steg (26) die allgemeine Form einer Platte mit insgesamt viereckigem Umriß besitzt.

19. Tragvorrichtung nach einem der Ansprüche 1 bis 18, **dadurch gekennzeichnet, daß** die beiden Stege (26) zwar getrennte Teile bilden, aber miteinander identisch sind.

## Claims

1. A support device for an electrical apparatus to be fitted transversely on a duct body from one of the two longitudinal walls thereof to the other, of the kind comprising two transverse portions (26) which, by engagement means (27), are each adapted to come into engagement with one or other of said longitudinal walls (11, 11') at each of their ends, and each of which is provided with fixing means (28) for locally permitting securing of the apparatus (12) to be fixed, **characterised in that** the fixing means (28) on a transverse portion (26) are mounted regulatably in position along the transverse portion.

2. A support device according to claim 1 **characterised in that** the fixing means (28) on a transverse portion (26) are mounted regulatably in position substantially continuously over a portion at least of the length of the transverse portion.

3. A support device according to either one of claims 1 and 2 **characterised in that** the fixing means (28) on a transverse portion (26) belong to a block (30) which, formed by a piece which is separate from said transverse portion (26), is mounted movably thereon.

4. A support device according to claim 3 **characterised in that** the block (30) to which the fixing means (28) belong can be locked in position on the transverse portion (26).

5. A support device according to either one of claims 3 and 4 **characterised in that**, carried by the transverse portion (26), the block (30) to which the fixing means (28) belong is appropriately retained thereby, forming therewith a unitary subassembly (31).

6. A support device according to any one of claims 3 to 5 **characterised in that** the fixing means (28) on a transverse portion (26) extend laterally with respect to said transverse portion (26), along an edge face (33) thereof, transversely with respect to said edge face (33), and the block (30) to which they belong laterally comprises in projecting relationship with respect to them at least one lug (34, 35) by way of which it is engaged with the transverse portion (26).

7. A support device according to claim 6 **characterised in that** the block (30) to which the fixing means (28) belong comprises in generally mutually parallel relationship two lugs (34, 35), namely a blocking lug (34), by way of which it is engaged into a slot (36) provided for that purpose in the actual thickness of the transverse portion (26), along a part at least of the length of the edge face (33) in question thereof, and a retaining lug (35), by way of which, passing around the transverse portion (26), it is hooked into a groove (37) provided for that purpose in recessed relationship on the rear face (38) thereof in parallel relationship with the edge face (33).

8. A support device according to claims 4 and 7 in combination **characterised in that** the blocking lug (34) of the block (30) to which the fixing means (28) belong comprises notches (39) and the corresponding flank (40) of the slot (36) in the transverse portion (26) itself comprises complementary notches (41).

9. A support device according to claim 8 **characterised in that** in parallel relationship with its blocking lug (34) and at a spacing therefrom the block (30) to which the fixing means (28) belong comprises an elastically deformable tongue portion (42) which bears against the other flank (44) of the slot (36) in the transverse portion (26).

10. A support device according to any one of claims 3 to 9 **characterised in that** indexing means (54) are provided between the block (30) to which the fixing means (28) belong and the transverse portion (26).

11. A support device according to claim 10 **characterised in that** the indexing means (54) give preference to a plurality of given positions for the block (30) to which the fixing means (28) belong.

12. A support device according to any one of claims 1 to 11 **characterised in that** the fixing means (28) form a screwing hole.

13. A support device according to any one of claims 1 to 12 **characterised in that** the engagement means (27) that the transverse portion (26) comprises at each of its ends to come into engagement with a longitudinal wall (11) of the duct body (10) being groove means provided in recessed relationship on the corresponding edge face (60), the lip (61) defining said groove means at the side of the front face (63) of the transverse portion (26) is of a smaller thickness than the lip (62) which extends at the side of its rear face (38).

14. A support device according to any one of claims 1 to 13 **characterised in that** at one at least of its ends the transverse portion (26) comprises at least one portion (66) which can be cut off and the engagement means (27) that it comprises for coming into engagement with a longitudinal wall (11, 11') of the duct body (10) are repeated there, its untouchable central portion (67) and its portion (66) which can be cut off, or each of its portions (66) which can be cut off, comprising such engagement means (27).

15. A support device according to claims 11 and 14 in combination **characterised in that** the transverse portion (26) comprises a plurality of portions (66A, 66B, 66C) which can be cut off.

16. A support device according to claim 7 **characterised in that** the transverse portion (26) has a slot (36) on each of its two opposite edge faces (33) and its groove (37) extends along a central line.

17. A support device according to any one of claims 1 to 6 **characterised in that** the transverse portion (26) is in one piece.

18. A support device according to any one of claims 1 to 17 **characterised in that** the transverse portion (26) is in the general shape of a plate portion of overall quadrangular contour.

19. A support device according to any one of claims 1 to 18 **characterised in that**, although forming separate pieces, the two transverse portions (26) are identical to each other.
